# FASCICULE DE BREVET EUROPEEN

(11) **EP 4 610 194 B1**
(45) Date de publication et mention de la délivrance du brevet: **15.07.2026**
(21) Numéro de dépôt: 24213661.2
(22) Date de dépôt: 18.11.2024
(51) Int. Cl.: B65D 88/62, B60P 3/24, B65D 90/04, B65D 88/54

(54) **CUVE DE STOCKAGE DE PRODUITS À VIDANGE HORIZONTALE PAR L INTERMÉDIAIRE D'UNE MEMBRANE, VÉHICULE POURVU D'UNE TELLE CUVE, PROCÉDÉ DE REMPLISSAGE D'UNE TELLE CUVE, PROCÉDÉ DE VIDANDE D'UNE TELLE CUVE ET PROCÉDÉ D'ESSORAGE DE PRODUITS DANS UNE TELLE CUVE**
TANK ZUR LAGERUNG VON PRODUKTEN MIT HORIZONTALEM ENTLEEREN ÜBER EINE MEMBRAN, FAHRZEUG DAMIT, VERFAHREN ZUM BEFÜLLEN EINES SOLCHEN TANKS, VERFAHREN ZUM ENTLEEREN EINES SOLCHEN TANKS UND VERFAHREN ZUM AUSQUETSCHEN VON PRODUKTEN IN EINEM SOLCHEN TANK
TANK FOR STORING PRODUCTS WITH HORIZONTAL EMPTYING VIA A MEMBRANE, VEHICLE THEREWITH, METHOD OF FILLING SUCH A TANK, METHOD OF EMPTYING SUCH A TANK AND METHOD OF SQUEEZING OUT PRODUCTS IN SUCH A TANK

(30) Priorité: 27.02.2024 FR 2401917
(43) Date de publication de la demande: 03.09.2025
(73) Titulaire: ORTEC EXPANSION, 13799 Aix En Provence Cedex 3 (FR)
(72) Inventeur: RIVARD, Daniel, 75007 PARIS (FR)
(74) Mandataire: Gevers & Orès

(56) Documents cités:
- EP-A1- 4 116 225
- FR-A1- 3 107 040
- US-A- 4 082 124

## Description

### Domaine technique

La présente invention concerne une cuve de stockage de produits à vidange horizontale par l'intermédiaire d'une membrane, et un véhicule, en particulier un hydrocureur, pourvu d'une telle cuve.

### État de la technique

La présente invention s'applique à tout type de cuve (ou citerne), mobile ou fixe, qui est destinée au stockage de produits et notamment des produits semi-liquides, des produits pâteux ou des solides pulvérulents.

Bien que non exclusivement, la présente invention s'applique plus particulièrement à une cuve d'un véhicule de collecte de déchets, et notamment d'un hydrocureur d'assainissement ou industriel. Un hydrocureur d'assainissement est destiné, en particulier, à assurer des opérations de curage et de pompage de réseaux d'eaux usées et d'ouvrages d'assainissement, et un hydrocureur industriel est destiné à des travaux de nettoyage d'équipements et d'installations industriels.

Généralement, la vidange d'une cuve d'un hydrocureur est réalisée, soit par le basculement de la cuve (ou citerne) généralement à 40°, soit par l'intermédiaire d'une cloison mobile qui est apte à se déplacer dans les deux sens, grâce à la génération d'une pression de part et d'autre de la cloison. Toutefois, chacune de ces deux solutions usuelles présente des inconvénients.

On connaît, par le document FR2107423, une cuve pour stocker des produits, qui permet de remédier aux inconvénients des solutions usuelles (basculement ou cloison mobile). Pour ce faire, cette cuve (comprenant une virole pourvue d'une ouverture à une extrémité longitudinale arrière et une porte apte à fermer cette ouverture) comporte, notamment :
- une membrane souple et étanche aux gaz et aux liquides, destinée à recevoir les produits à stocker, ladite membrane étant pourvue d'une ouverture, étant agencée à l'intérieur de la cuve de sorte que son ouverture est en regard de l'ouverture de la virole, et étant fixée suivant une zone de fixation annulaire à la face interne de la virole autour de son ouverture de manière à créer un espace dit libre, fermé, entre la membrane et la cuve ; et
- un système pour générer une mise en pression et une mise en dépression de l'espace libre entre la cuve et la membrane.

L'utilisation de la membrane souple permet d'obtenir un système de vidange efficace et léger, qui permet de remédier aux inconvénients des solutions usuelles. En outre, la vidange de cette cuve peut être réalisée à l'horizontale (sans basculement), ce qui permet de diminuer le risque de retournement du porteur et de son équipement lors de la vidange de la cuve sur des terrains instables.

Pour faciliter le pompage de produits à l'intérieur de la membrane, une mise à dépression est réalisée à l'intérieur de la membrane. Pour ce faire, la membrane est fixée à distance de l'arrière de la virole, afin de permettre un accès dans la membrane pour mettre en œuvre la mise en dépression.

Un tel agencement n'est pas une solution optimale, car la cuve n'est pas complètement vidée par le retournement et la sortie de la membrane. De plus, le nettoyage de la cuve n'est pas optimisé.

L'un des objectifs de la présente invention est de perfectionner cette cuve à membrane, en particulier pour remédier à ces inconvénients.

Par ailleurs, on connaît, par le document US 4 082 124, une cuve qui est divisée, par un diaphragme flexible, en deux chambres de volume variable dont une première chambre est destinée à stocker un fluide, permettant de faciliter le remplissage et la vidange par application d'une pression ou d'un vide dans la seconde chambre.

### Exposé de l'invention

La présente invention concerne une cuve pour stocker des produits, en particulier des produits semi-liquides, pâteux ou solides pulvérulents, ladite cuve comportant :
- une virole pourvue d'une ouverture arrière à une extrémité longitudinale arrière et une porte apte à fermer cette ouverture ;
- une membrane souple et étanche aux gaz et aux liquides, destinée à recevoir les produits à stocker, ladite membrane étant pourvue d'une ouverture, étant agencée à l'intérieur de la cuve et étant fixée suivant une zone de fixation annulaire à la face interne de la virole de manière à créer un espace dit libre fermé, entre la membrane et la cuve ; et
- un système pour générer une mise en pression et une mise en dépression de l'espace libre entre la cuve et la membrane, ledit système comportant un générateur de vide configuré pour générer une mise en dépression d'un espace interne à l'intérieur de la membrane,
la membrane étant configurée pour :
- pouvoir être complètement plaquée contre la face interne de la virole sous l'effet d'une mise en dépression générée par ledit système ; et
- pouvoir être retournée et sortie de la cuve, à travers ladite porte ouverte, sous l'effet d'une mise en pression générée par ledit système.

De plus :
- la cuve est pourvue d'une niche qui est formée à l'intérieur et à l'arrière de la virole, qui est agencée entre la virole et la membrane et qui débouche, par une sortie arrière, à l'ouverture arrière de la virole ;
- la virole est pourvue d'au moins un orifice traversant débouchant à l'intérieur de la niche, le générateur de vide étant lié par l'extérieur audit orifice ;
- la membrane est fixée à l'extrémité longitudinale arrière de la virole de sorte que son ouverture coïncide sensiblement avec l'ouverture arrière de la virole ; et
- un passage est formé à partir dudit orifice jusqu'à l'espace interne de la membrane, via d'une part la niche et d'autre part un espace entre l'arrière de la membrane et la porte qui est bombée vers l'arrière, ledit passage permettant audit générateur de vide de générer une mise en dépression de l'espace interne de la membrane en vue d'un pompage de produits dans ladite membrane.

Ainsi, grâce à l'utilisation de la membrane souple, on obtient un système de vidange efficace et léger. De plus, la vidange de la cuve peut être réalisée en toute sécurité, rapidement et à l'horizontale (sans basculement), ce qui permet de diminuer le risque de retournement du porteur et de son équipement lors de la vidange de la cuve sur des terrains instables.

En outre, grâce à l'agencement de la membrane à l'extrémité arrière de la virole, la membrane peut être complètement sortie lors d'une mise en pression de l'espace libre. Ainsi, l'ensemble des produits qui étaient stockés dans la membrane sont évacués lorsque la membrane est retournée et (complètement) sortie de la cuve, ce qui permet de vider complètement la cuve et de remédier à l'inconvénient précité.

En outre, l'agencement de la membrane à l'extrémité arrière de la virole permet également :
- de protéger l'ensemble de la virole ; et
- de pouvoir rincer facilement et complètement la membrane lorsqu'elle est retournée et complètement sortie.

Par ailleurs, grâce au passage formé depuis ledit orifice dans la virole (auquel est lié le générateur de vide) jusqu'à l'espace interne de la membrane, il est possible, malgré l'agencement la membrane à l'extrémité arrière de la virole, de générer une mise en dépression de cet espace interne de la membrane en vue d'un pompage de produits dans la membrane.

Dans un mode de réalisation préféré, la niche présente, à sa sortie arrière, une forme biconvexe avec deux surfaces convexes opposées de même rayon de courbure (c'est-à-dire deux surfaces de même forme et de même rayon de courbure), de sorte que la distance allouée à la fixation de la membrane (de section transversale circulaire) correspond à la longueur de son périmètre, ce qui évite notamment l'apparition de faux plis dans la membrane.

Avantageusement, la niche est formée d'au moins une pièce rapportée qui est soudée sur la face interne de la virole, ce qui permet de la réaliser facilement. De plus, de façon avantageuse, la niche est fermée et étanche, excepté au niveau de sa sortie arrière et de l'orifice.

Par ailleurs, dans un mode de réalisation particulier, la cuve comporte un pot d'aspiration qui est fixé sur la paroi externe de la virole autour de l'orifice. De plus, avantageusement, le pot d'aspiration est pourvu d'une boule anti-débordement, ce qui permet d'empêcher que des produits soit aspirés vers le générateur de vide lors d'une mise en dépression de l'espace interne de la membrane pendant un pompage de produits.

Dans un mode de réalisation particulier :
- la face avant de la membrane est sensiblement plane ;
- la membrane présente une longueur telle que, lorsqu'elle est plaquée contre la face interne de la virole, son extrémité avant est située longitudinalement au niveau que l'extrémité avant de la virole ; et
- la cuve comprend un fond avant qui est bombé vers l'avant.

En outre, avantageusement, la cuve comporte un dispositif de limitation de pression configuré pour pouvoir limiter la pression dans l'espace libre entre la cuve et la membrane.

Par ailleurs, de façon avantageuse, la cuve comporte au moins deux tubes de support, aptes à être amenés d'une position rétractée à une position étendue vers l'arrière de la cuve lorsque la membrane est sortie de la cuve, et, dans la position étendue, les tubes sont positionnés sensiblement parallèlement à l'axe longitudinal de la virole de manière à pouvoir soutenir la membrane lors du mouvement pression-dépression.

Dans le cadre de la présente invention, la membrane peut être fixée de différentes manières à la face interne de la cuve. Toutefois, dans un mode de réalisation préféré, la membrane est fixée par pincement entre, d'une part, au moins une plaque (en forme de couronne) fixée à l'extrémité arrière de la cuve sur la face interne de la virole et sur la niche, et d'autre part, au moins une contre-plaque. Ceci permet de fixer facilement, rapidement et efficacement la membrane sur la cuve.

Par ailleurs, de façon avantageuse, la membrane est réalisée en un matériau composite (relativement fin) comprenant différentes couches superposées, formées respectivement au moins d'une toile étanche (à l'air et aux eaux de condensation), d'un tissu (apportant la résistance mécanique nécessaire) et d'une peau (en polytétrafluoéthylène) antistatique, résistant mécaniquement aux chocs et à l'abrasion des déchets solides et chimiquement à l'agression d'acides, de bases, d'hydrocarbures, ...

La présente invention concerne également un véhicule, en particulier un hydrocureur, qui comporte au moins une cuve telle que celle décrite ci-dessus.

La présente invention concerne également plusieurs procédés relatifs à l'utilisation de ladite cuve.

Premièrement, elle comprend un procédé de remplissage de la cuve, ledit procédé de remplissage comprenant au moins les étapes suivantes, consistant à :
- fermer la porte de la cuve ;
- générer une mise en dépression de l'espace libre entre la cuve et la membrane, à l'aide du système de mise en dépression, de manière à plaquer la membrane contre la face interne de la cuve ;
- générer une mise en dépression de l'espace interne à l'aide du générateur de vide afin que la pression atmosphérique pousse les produits dans cet espace interne, à travers un orifice de remplissage, à l'intérieur de la membrane ; et
- quand le remplissage est terminé, arrêter le maintien en dépression de l'espace interne.

Deuxièmement, elle comprend également un procédé de vidange de la cuve, ledit procédé de vidange comprenant au moins les étapes suivantes, consistant à :
- ouvrir la porte de la cuve ;
- générer une mise en pression de l'espace libre entre la cuve et la membrane, à l'aide du système de mise en pression, de manière à repousser la membrane et la déplacer, ce déplacement provoquant un retournement complet de la membrane et une éjection des produits à travers la porte en position ouverte ; et
- quand la vidange est terminée, arrêter la mise en pression de l'espace libre.

Troisièmement, elle comprend, en outre, un procédé d'essorage de produits de la cuve, ledit procédé d'essorage comprenant au moins les étapes suivantes, consistant à :
- la porte de la cuve étant fermée, générer une mise en pression de l'espace libre entre la cuve et la membrane, à l'aide du système de mise en pression, de manière à repousser la membrane et la déplacer, ce déplacement comprimant les produits présents dans la cuve de manière à générer une séparation des jus qui sont évacués par un orifice d'évacuation (ou de vidange ou de décantation) qui est ouvert ; et
- quand l'essorage est terminé, arrêter la mise en pression de l'espace libre et fermer l'orifice d'évacuation.

### Brève description des figures

Les figures annexées feront bien comprendre comment l'invention peut être réalisée. Sur ces figures, des références identiques désignent des éléments semblables.
La figure 1 est une vue schématique en coupe d'une cuve de stockage de produits, dans une position ouverte.
La figure 2 est une vue schématique en coupe de la cuve de stockage de produits, dans une position fermée.
La figure 3 est une vue similaire à celle de la figure 1, dans une position ouverte, avec la membrane complètement sortie.
Les figures 4A à 4C sont des vues schématiques en coupe d'une cuve de stockage de produits, illustrant différentes étapes successives de déplacement de la membrane d'une position plaquée contre la cuve à une position complètement déployée, lors d'une vidange de la cuve.
La figure 5 est une vue partielle arrière de la virole de la cuve, pourvue d'une niche.
La figure 6 est une vue schématique partielle, en coupe, d'un mode de réalisation préféré d'une membrane souple et étanche.
La figure 7 est une vue en plan d'un exemple d'hydrocureur pourvu notamment d'une cuve de stockage de produits.
La figure 8 est une vue en perspective d'une boule anti-débordement.

### Description détaillée

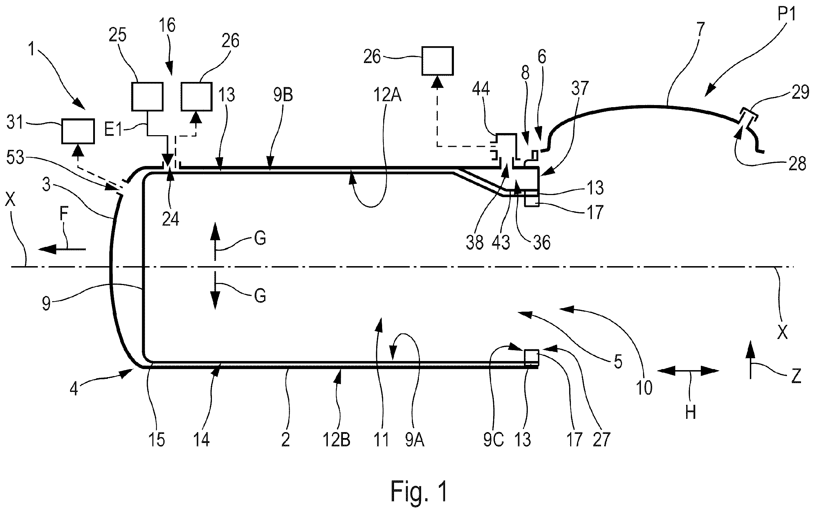

La cuve 1, illustrant l'invention et représentée schématiquement sur la figure 1, est destinée à recevoir et stocker des produits, par exemple en vue d'un transport. La cuve 1 est apte à stocker divers types de produits. Elle est particulièrement adaptée au stockage de produits tels que des produits semi-liquides, des produits pâteux ou des solides pulvérulents.

La cuve 1 peut être utilisée dans des applications variées, comme précisé ci-dessous.

La cuve 1 comporte, comme représenté sur la figure 1, une virole 2, c'est-à-dire une pièce cylindrique creuse, d'axe longitudinal X-X. Dans l'exemple représenté, la virole 2 est réalisée sous forme d'un cylindre droit. La virole de la cuve peut, toutefois, présenter toute autre forme cylindrique dans le cadre de la présente invention.

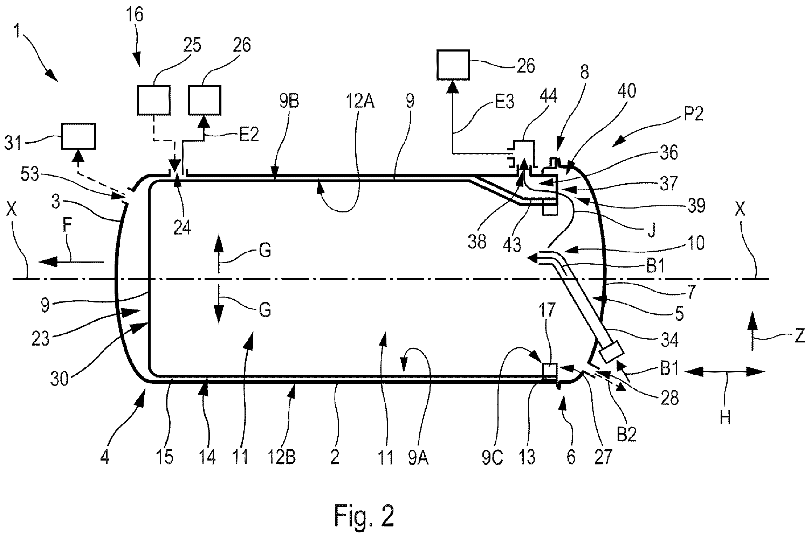

La virole 2 est fermée par un fond 3 à une extrémité longitudinale dite extrémité avant 4 (selon l'axe longitudinal X-X), et elle est pourvue d'une ouverture 5 à l'autre extrémité longitudinale dite extrémité arrière 6. Les termes « avant » et « arrière » sont définis, dans la description suivante, le long de l'axe longitudinal X-X, avec « avant » dans le sens d'une flèche F représentée sur les figures 1 et 2 et « arrière » dans le sens opposé à celui de la flèche F.

Bien entendu, dans le cadre de la présente invention, l'ouverture 5 pourrait également être prévue à l'extrémité avant et le fond 3 à l'extrémité arrière de la cuve.

De plus, les termes « interne » et « externe » sont définis par rapport à l'axe longitudinal X-X, avec « externe » en s'écartant de l'axe longitudinal X-X, comme illustré par des flèches G sur les figures 1 et 2, et « interne » en s'approchant de l'axe longitudinal X-X, en sens inverse à celui des flèches G.

La cuve 1 est disposée horizontalement, c'est-à-dire qu'elle est disposée de sorte que son axe longitudinal X-X est sensiblement parallèle à l'horizontale illustrée par une double flèche H sur les figures 1 et 2.

La direction verticale est illustrée, quant à elle, par une flèche Z. Le terme « haut » est défini dans le sens de la flèche Z et le terme « bas » est défini en sens inverse à celui de la flèche Z.

La cuve 1 comporte, de plus, une porte 7 de type usuel, prévue à l'extrémité arrière 6 de la cuve 1 et configurée pour pouvoir :
- complètement libérer l'ouverture 5 dans une position ouverte P1 telle que représentée sur la figure 1 ; et
- fermer l'ouverture 5 dans une position fermée P2 telle que représentée sur la figure 2.

Pour ce faire, la porte 7 est liée, par des charnières 8 usuelles représentées schématiquement, à la cuve 1, et elle comporte, pour son fonctionnement, des moyens usuels non décrits davantage et non représentés.

La virole 2, le fond 3 et la porte 7 de la cuve 1 peuvent être réalisés en différents matériaux métalliques ou composites, et notamment en inox.

La cuve 1 comporte, de plus, une membrane 9 qui est, à la fois, souple (ou flexible) et étanche aux gaz et aux liquides. Cette membrane 9 (de face interne 9A) définit un espace interne 11 (ou espace de stockage) destiné à recevoir les produits de stockage.

Pour ce faire, ladite membrane 9 est pourvue d'une ouverture 10 (à l'arrière). La membrane 9 est une poche (ou enveloppe) complètement fermée à l'exception de l'ouverture 10, et elle est agencée à l'intérieur de la cuve 1 de sorte que cette ouverture 10 est en regard de l'ouverture 5 de la virole 2, pourvue de la porte 7.

La membrane 9 est fixée par son extrémité dite ouverte 9C (au niveau de l'ouverture 10) sur la face interne 12A de la virole 2 de la cuve 1, tout autour de sa périphérie, c'est-à-dire selon une zone fixation 27 de forme annulaire de manière à créer un espace dit libre 15, fermé, entre la membrane 9 et la cuve 1. La membrane 9 est fixée à l'arrière de la virole 2, de sorte que son ouverture 10 coïncide sensiblement avec l'ouverture 5 de la virole 2, c'est-à-dire que les deux ouvertures 5 et 10 sont situées à la même position longitudinalement (selon l'axe X-X).

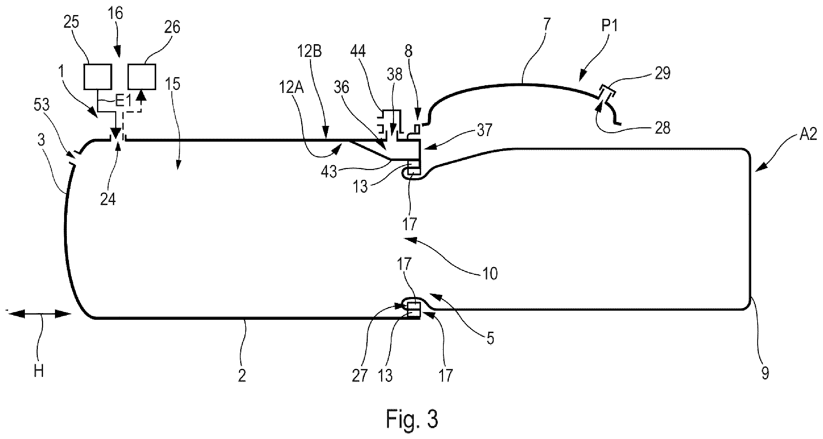

La membrane 9 est configurée pour :
- pouvoir être complètement plaquée contre la face interne 12A de la virole 2 sous l'effet d'une mise en dépression générée par un système 16 comme représenté sur la figure 2 ; et
- pouvoir être retournée et sortie de la cuve 1, à travers la porte 7 ouverte, sous l'effet d'une mise en pression générée par le système 16, comme représenté sur la figure 3.

Ainsi, grâce à l'utilisation de la membrane 9 souple, on obtient un système de vidange efficace et léger. De plus, la vidange de la cuve 1 peut être réalisée en toute sécurité, rapidement et à l'horizontale (sans basculement), ce qui permet de diminuer le risque de retournement du porteur et de son équipement lors de la vidange de la cuve sur des terrains instables.

En outre, grâce à l'agencement de la membrane 9 à l'extrémité arrière de la virole 2, la membrane 9 peut être complètement sortie lors d'une mise en pression de l'espace libre 15. De plus, l'ensemble des produits qui étaient stockés dans la membrane 9 sont évacués lorsque la membrane 9 est retournée et (complètement) sortie de la cuve 1, comme décrit ci-dessous, ce qui permet de vider complètement la cuve 1.

L'agencement de la membrane 9 à l'extrémité arrière de la virole 2 permet également :
- de protéger l'ensemble de la virole 2 ; et
- de pouvoir rincer facilement et complètement la membrane 9 lorsqu'elle est retournée et complètement sortie.

A titre d'illustration non limitative, la membrane 9 présente, par exemple, une épaisseur entre 2 et 8 millimètres.

Par ailleurs, la cuve 1 comporte également le système 16 pour générer une mise en pression ou une mise en dépression de l'espace libre 15 entre la cuve 1 et la membrane 9. Dans un mode de réalisation particulier, le système 16 comporte un générateur d'air comprimé 25 et un générateur de vide 26, comme précisé ci-dessous.

Dans un mode de réalisation préféré, le système 16 comporte un unique équipement qui peut mettre en œuvre les deux fonctions (de mise en pression et de mise en dépression), à savoir soit une pompe à vide qui peut être adaptée pour être utilisée comme compresseur, soit un hydroéjecteur qui peut produire une pression de 500 grammes.

En outre :
- la cuve 1 est pourvue d'une niche 36 qui est formée à l'intérieur et à l'arrière de la virole 2, qui est agencée entre la virole 2 et la membrane 9 et qui débouche, par une sortie 37 arrière, à l'ouverture 5 arrière de la virole 2, comme représenté sur les figures 1 à 3 ; et
- la virole 2 est pourvue d'au moins un orifice 38 traversant la paroi de la virole 2, qui débouche à l'intérieur de la niche 36, le générateur de vide 26 étant lié par l'extérieur audit orifice 38 (via un pot d'aspiration 44, comme précisé ci-dessous).

Ainsi, un passage 39 illustré par une flèche J sur la figure 2 est formé à partir dudit orifice 38 (auquel est lié le générateur de vide 26) jusqu'à l'espace interne 11 de la membrane 9, via d'une part la niche 36 et d'autre part un espace 40 entre l'arrière de la membrane 9 et la porte 7 qui est bombée (convexe) vers l'arrière. Ce passage 39 permet audit générateur de vide 26, malgré l'agencement de la membrane 9 à l'extrémité arrière de la virole 2, de disposer d'un chemin pour générer une mise en dépression de l'espace interne 11 de la membrane 9 lors d'un pompage de produits dans ladite membrane 9, dans le but de faciliter le pompage.

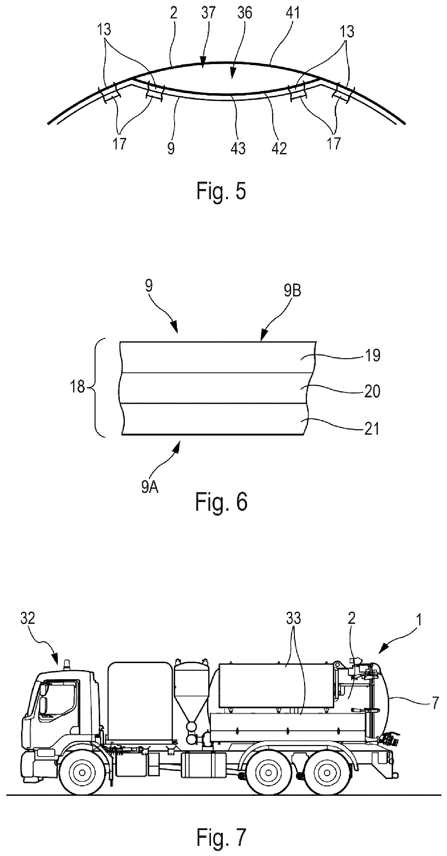

Dans un mode de réalisation préféré, la niche 36 présente, à sa sortie 37 arrière, une forme biconvexe comme représenté sur la figure 5. Cette forme biconvexe est constituée de deux surfaces 41 et 42 convexes opposées de même rayon de courbure, c'est-à-dire de deux surfaces 41 et 42 de même forme et de même rayon de courbure. La surface 41 correspond à la surface interne d'un arc de cercle de la virole 2 et la surface 42 correspond à la surface externe d'une pièce rapportée 43. Ces surfaces 41 et 42 présentent, en section transversale, la même longueur. Ainsi, la distance allouée à la fixation de la membrane 9 (de section transversale circulaire), à l'arrière de la virole 2, le long de la virole 2 et de la niche 36, est égale à son périmètre, ce qui évite l'apparition de faux pli dans la membrane 9 lorsqu'elle est fixée à son extrémité arrière et permet d'utiliser une membrane de forme cylindrique, simple à réaliser et de coût réduit.

De préférence, la niche 36 est formée d'au moins une pièce rapportée 43 (figures 1 à 3) qui est soudée sur la face interne 12A de la virole 2, ce qui permet de réaliser la niche 36 facilement et à coût réduit. De plus, la niche 36 est fermée et étanche, excepté au niveau de sa sortie 37 arrière et de l'orifice 38.

Par ailleurs, dans un mode de réalisation particulier, la cuve 1 comporte également un pot d'aspiration 44. Ce pot d'aspiration 44, auquel est lié le générateur de vide 26, est fixé sur la paroi externe 12B de la virole 2 autour de l'orifice 38, comme représenté schématiquement sur les figues 1 à 3.

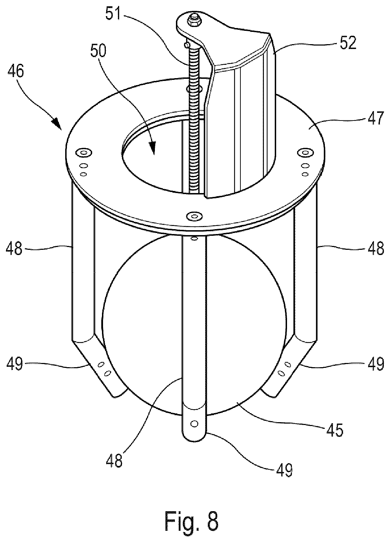

Le pot d'aspiration 44 est pourvu d'une boule anti-débordement 45 représentée sur la figure 8. Cette boule anti-débordement 45 permet d'empêcher que des produits soient aspirés vers le générateur de vide 26, lors d'une mise en dépression de l'espace interne 11 de la membrane 9 pendant un pompage de produits.

La boule anti débordement 45 est montée dans un support 46. Ce support 46 comprend un anneau 47 supérieur, auquel sont liées quatre jambes 48, réparties uniformément autour de la périphérie de l'anneau 47 et fixées orthogonalement à ce dernier. Les jambes 48 sont pourvues, chacune, d'un pied 49 recourbé vers l'intérieur. Ces pieds 49 permettent de retenir la boule anti-débordement 45. Cette boule anti-débordement 45 est apte à flotter et, si nécessaire, à se plaquer contre l'anneau 47 de manière à fermer son ouverture 50 pour bloquer l'aspiration et empêcher que des produits soient aspirés vers le générateur de vide 26.

La boule anti-débordement 45 est, de plus, liée par un ressort 51 et une potence 52 à l'anneau 47 pour créer une continuité électrique, ces pièces étant des pièces métalliques. Ceci a notamment pour avantage d'éviter la génération d'un arc électrique lors du pompage dans une atmosphère de type ATEX.

Par ailleurs, dans un mode de réalisation particulier, comme représenté sur la figure 2 :
- la face 30 avant de la membrane 9 est sensiblement plane ;
- la membrane 9 présente une longueur telle que, lorsqu'elle est plaquée contre la face interne 12A de la virole 2, son extrémité avant (ou face 30 avant) est située longitudinalement au niveau que l'extrémité avant de la virole 2 ; et
- le fond 3 avant de la cuve 1 est bombé (convexe) vers l'avant.

Ce mode de réalisation permet de conserver un espace 23 (figure 2) entre la face 30 avant de la membrane 9 et le fond 3 avant de la cuve 1 lorsque la membrane 9 est plaquée contre la face interne 12A de la virole 2. Cet espace 23 est avantageux pour l'aspiration et la mise en place de la membrane 9 contre la face interne 12A de la virole 2.

Par ailleurs, la cuve 1 comporte un dispositif de limitation de pression 31 qui est isolé par une vanne et qui est configuré pour pouvoir limiter la pression dans l'espace libre 15 entre la cuve 1 et la membrane 9, à travers un orifice 53 prévu en partie supérieure du fond 3 avant.

Dans le cadre de la présente invention, la membrane 9 peut être fixée de différentes manières à la face interne 12A de la cuve 1.

Toutefois, dans un mode de réalisation préféré, la membrane 9 est fixée par pincement, ce qui permet notamment de faciliter les opérations de maintenance. Pour ce faire, une plaque 13 métallique, en forme de couronne, est fixée, de préférence soudée, sur la face interne 12A de la cuve 1 tout autour de la périphérie de la cuve 1, au niveau de la zone de fixation 27 à l'arrière de la cuve 1. L'extrémité ouverte 9C de la membrane 9 est coincée et retenue entre cette plaque 13 et une ou plusieurs contre-plaques de fixation 17, qui sont visées sur la couronne 13. Pour des raisons de simplification du dessin, on a uniquement des tronçons de la plaque 13 et de la contre-plaque 17 sur la figure 5.

Par ailleurs, dans un mode de réalisation préféré, la membrane 9 est réalisée en un matériau composite 18 comprenant différentes couches superposées présentant des propriétés variées pour permettre de conférer à ladite membrane 9 les caractéristiques recherchées.

De préférence, la membrane 9 comporte, comme représenté schématiquement sur la figure 6, au moins une toile imperméable 19 (ou étanche aux gaz et aux liquides), un tissu 20 apportant une résistance mécanique à la membrane 9, et une peau 21, de préférence en polytétrafluoroéthylène **PTFE** antistatique. La peau 21 qui est prévue sur la face interne 9A de la membrane 9 destinée à venir en contact des produits, apporte une résistance aux chocs mécaniques, à l'agressivité chimique des produits et à l'adhérence des produits. Une membrane 9 ainsi réalisée présente des caractéristiques de souplesse appropriées et de résistance à divers types d'agression, ce qui lui permet de mettre en œuvre efficacement les différentes fonctions dédiés. Elle permet également de protéger la virole 2 de la cuve 1 contre les différentes agressions potentielles, et comme la membrane 9 est agencée à l'arrière de la virole 2, elle permet de protéger l'ensemble de la face interne 12A de la virole 2.

En outre, le système 16 pour générer une mise en pression et une mise en dépression comprend un orifice 24 pratiqué dans la virole 2 et pourvu de moyens usuels de raccordement de conduit (non représentés). L'orifice 24 est pratiqué sur le haut de la virole 2 à l'extrémité avant 4 opposée à l'extrémité arrière 6 pourvue de l'ouverture 5.

Dans le mode de réalisation particulier, représenté sur les figures 1 et 2, la cuve 1 comporte, comme élément de mise en pression, le générateur d'air comprimé 25 et, comme élément de mise en dépression, le générateur de vide 26.

Dans le cadre de la présente invention :
- le générateur d'air comprimé 25 peut être tout type de générateur usuel apte à insuffler de l'air comprimé dans l'espace libre 15 à travers l'orifice 24, comme illustré par une flèche E1 sur la figure 1 ; et
- le générateur de vide 26 peut être tout type de générateur de vide usuel, de préférence pneumatique (mais non exclusivement), apte à générer un vide dans l'espace libre 15 à travers l'orifice 24, comme illustré par une flèche E2 sur la figure 2.

Dans un mode de réalisation préféré, le système 16 comporte un unique équipement qui peut mettre en œuvre les deux fonctions (de mise en pression et de mise en dépression), à savoir soit fonctionner comme générateur d'air comprimé 25, soit fonctionner comme générateur de vide 26, selon le besoin.

Dans une variante de réalisation (non représentée), on peut prévoir deux orifices, dont l'un est destiné à la mise en pression et l'autre à la mise en dépression.

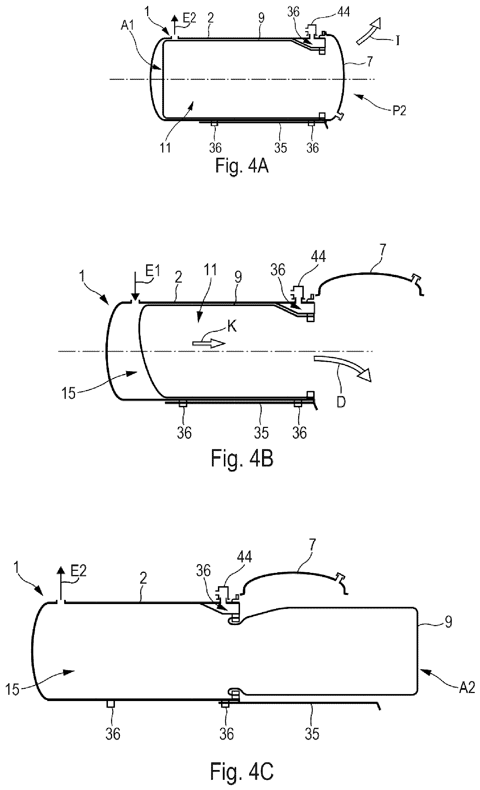

La mise en pression de l'espace libre 15 permet de repousser la membrane 9 (qui est retournée et sortie de la cuve comme représenté sur la figure 3) et de refouler les produits contenus dans la cuve 1 vers l'arrière, afin de les évacuer à travers la porte 7 ouverte, comme décrit ci-dessous en référence aux figures 4A à 4C.

La mise en dépression de l'espace libre 15 permet, quant à elle, de plaquer la membrane 9 contre la face interne 12A de la cuve 1 afin de l'amener dans une position dite « de contenant » de façon à permettre le remplissage de son espace interne 11 de stockage, à travers un orifice de remplissage comme précisé ci-dessous. La membrane 9 épouse alors la forme de la face interne 12A de la cuve 1, comme représenté sur la figure 2 notamment.

Le générateur de vide 26 est également configuré pour générer une mise en dépression de l'espace interne 11 à l'intérieur de la membrane 9 en vue d'un pompage de produits dans ladite membrane, comme précisé ci-dessous. Pour ce faire, le générateur de vide 26 est apte à générer un vide dans l'espace 11 (via le passage 39) à travers l'orifice 38, comme illustré par une flèche E3 sur la figure 2.

Dans une variante de réalisation, il est envisageable de prévoir deux générateurs de vide, par exemple tels que le générateur de vide 26, dont l'un est destiné à la mise en dépression de l'espace libre 15 et dont l'autre est destiné à la mise en dépression de l'espace interne 11.

En outre, dans un mode de réalisation particulier, on prévoit, de plus, au moins deux tubes (ou barres) 35 de support qui sont agencés à l'arrière de la cuve 1 (figures 4A à 4C). Ces tubes 35 sont agencés au bas de la cuve 1, de part et d'autre de cette dernière. Ils sont aptes à être maintenus et à coulisser dans des bagues (ou guides) 36 montées sur la cuve 1.

Ces tubes 35 sont configurés pour pouvoir être amenés dans une position rétractée (figures 4A et 4B) ou dans une position étendue vers l'arrière dans laquelle les tubes 35 sont sortis, comme représenté sur la figure 4C. Les tubes 35 sont alors orientés horizontalement. Les tubes 35 sont amenés dans la position étendue, en étant tirés vers l'arrière par un opérateur. Ces tubes 35 permettent de soutenir la membrane 9 lorsqu'elle est complètement sortie et qu'elle n'est plus soumise à une pression d'expulsion, à savoir plus précisément lors du passage de la mise en pression de l'espace libre 15 à l'absence de mise pression (ou à la mise en dépression) dudit espace libre 15.

Par ailleurs, la porte 7 de la cuve 1 est pourvue, dans une partie basse, d'au moins un orifice 28 d'évacuation (ou de vidange ou de décantation), muni d'une vanne et d'un bouchon 29 amovible apte à fermer orifice 28 lorsqu'il est en place (figures 1 et 3) et à libérer l'orifice 28 lorsqu'il est enlevé (figure 2). L'orifice 28 de remplissage et/ou d'évacuation comprend également des moyens de raccordement d'un conduit (non représenté).

La porte 7 de la cuve 1 est également pourvue d'une pipe 34 pourvue de tous les équipements usuels pour permettre le remplissage de la cuve 1, comme représenté uniquement sur la figure 2 pour des raisons de simplification du dessin.

Dans une variante de réalisation (non représentée), la cuve 1 peut comporter un seul orifice en partie basse, destiné à la fois au remplissage et à l'évacuation (ou la vidange ou la décantation).

La cuve 1, telle que décrite ci-dessus, peut être remplie ou chargée à l'aide d'un procédé de remplissage (ou de chargement) décrit ci-après, en référence à la figure 2.

Pour ce faire, la porte 7 est fermée, et amenée dans la position fermée P2.

Puis, une dépression appropriée est générée dans l'espace libre 15 (entre la cuve 1 et la membrane 9), à l'aide du générateur de vide 26 par tirage au vide (comme illustré par la flèche E2), de manière à plaquer la membrane 9 contre la face interne 12A de la cuve 1. Ensuite, le vide est créé dans l'espace interne 11 au travers de l'orifice 38 à l'aide du générateur de vide 26 (comme illustré par la flèche E3).

Dans cette position fermée P2, telle que représentée sur la figure 2, les produits à pomper, situés à l'extérieur de la cuve 1, sont poussés sous la pression atmosphérique dans l'espace interne 11 (dans laquelle est créé le vide), à l'aide de moyens usuels de pompage (non représentés), à travers un orifice de remplissage prévu dans la cuve 1, par l'intermédiaire de la pipe 34 de remplissage, comme illustré par une flèche B1. Les produits pénètrent à l'intérieur de la membrane 9, dans l'espace interne 11 de stockage.

Quand le remplissage est terminé, on arrête la dépression générée dans l'espace interne 11 à l'aide du générateur de vide 26.

Si la cuve 1 n'est pas complètement remplie, il est possible de maintenir les produits en position (ou de les bloquer) notamment pour réduire la mobilité de la masse liquide. Pour ce faire, on génère une pression appropriée dans l'espace libre 15 à l'aide du générateur d'air comprimé 25 pour déplacer la membrane 9 et adapter le volume de l'espace 11 de stockage au volume de produit contenu à l'intérieur de la membrane 9. Ce maintien est notamment avantageux lors d'un déplacement de la cuve, en particulier lorsqu'elle est montée sur un véhicule, en permettant d'éviter des mouvements intempestifs des liquides contenus dans les produits lors d'un roulage.

La cuve 1, telle que décrite ci-dessus, est également apte à mettre en œuvre un essorage de produits semi-liquides, notamment des boues, contenus dans l'espace interne 11 de stockage.

Pour ce faire, la porte arrière 7 de la cuve 1 est fermée, comme représenté sur la figure 2. L'espace libre 15 entre la face interne 12A de la cuve 1 et la face externe 9B de la membrane 9 est mis sous pression à l'aide du générateur d'air comprimé 25. Cette mise sous pression comprime les produits semi-liquides de manière à générer une séparation de l'eau et des jus qui se retrouvent dans la partie haute de la cuve 1 et qui peuvent être évacués par l'orifice 28 prévu dans la partie basse de la porte 7, comme illustré par une flèche B2 en tirets (la vanne étant ouverte et le bouchon 29 étant bien entendu enlevé dans ce cas).

Par ailleurs, la cuve 1, telle que décrite ci-dessus, peut être vidée (ou déchargée) en restant à l'horizontale, à l'aide d'un procédé de vidange (ou de déchargement) décrit ci-après en référence aux figures 4A à 4C.

Pour réaliser la vidange, en partant de la position fermée P2 de la figure 4A avec la membrane 9 dans une position A1 en contact de la paroi interne de la cuve 1, la porte 7 est ouverte, comme montré par une flèche I, et elle est amenée dans sa position ouverte P1 (figure 4B).

L'espace libre 15, entre la face interne 12A de la cuve 1 et la face externe 9B de la membrane 9, est mis sous pression (contrôlée) à l'aide du système 16 pour générer une mise en pression, comme illustré par la flèche E1.

La mise en pression permet de repousser la membrane 9 et la déplacer, comme illustré par une flèche K sur la figure 4B.

Plus précisément, la mise en pression permet de déplacer la membrane 9, entre la position A1 (représentée sur la figure 4A) dans laquelle elle est plaquée contre la face interne 12A de la cuve 1 et une position A2 (représentée sur la figure 4C) dans laquelle elle est complètement retournée et déployée vers l'arrière.

Pour la mise en pression, on injecte une pression d'air comprimé dans l'espace libre 15. Cet air comprimé peut, par exemple, être stocké dans une bouteille de 300 litres à 10 bars.

En position de remplissage de la cuve 1, la membrane 9 reste plaquée sur la partie interne de la cuve 1. Lors de la vidange, la membrane 9 se retourne en expulsant à l'extérieur de la cuve 1 les produits stockés à l'intérieur de la membrane 9. Ceci permet une évacuation rapide, efficace et complète des produits.

Le déplacement de la membrane 9 permet donc de refouler les produits contenus dans la cuve 1, vers l'arrière, et de les évacuer (ou éjecter) à travers la porte 7 ouverte, comme illustré par une flèche D sur la figure 4B.

Les tubes 35 de support sont amenés dans la position étendue (avec une orientation sensiblement parallèle à l'axe de révolution de la virole 2) lorsque la membrane 9 est sortie de la cuve 1, comme représenté sur la figure 4C. Les tubes 35 permettent de soutenir la membrane 9 lorsqu'elle est complètement sortie et qu'elle n'est plus soumise à une pression d'expulsion, mais est de nouveau aspirée dans la cuve 1 par la génération d'une dépression dans l'espace libre 15 comme illustré par une flèche E2 sur la figure 4C.

Un avantage de la cuve 1 est une meilleure garantie pour éviter la production d'ATEX qui serait rejeté par la pompe à vide lors d'opérations de pompage particulières comme, par exemple, le pompage de 5000 litres sur 10000 litres de capacité. Ces 5000 litres pompés, on peut bloquer le liquide vers l'arrière avec la membrane. Pour pomper les 5000 litres suivants, il suffit de pomper de nouveau du côté de la membrane et ainsi, on peut recréer le vide sans pour autant pomper des ATEX puisque la membrane étanche sépare du vide. Il n'est plus nécessaire de dégazer la cuve 1 pour répéter plusieurs opérations de pompage.

La cuve 1, telle que décrite ci-dessus, peut correspondre à tout type de cuve (ou citerne), qui est destinée au stockage de produits et notamment des produits semi-liquides, des produits pâteux ou des solides pulvérulents. La cuve peut être installée à poste fixe ou être montée sur un engin (ou véhicule) mobile, notamment un véhicule roulant.

Dans une application préférée, la cuve 1 est une cuve d'un véhicule de collecte de déchets, et plus particulièrement d'un hydrocureur 32, comme représenté sur la figure 7. L'hydrocureur 32 est destiné, notamment, à assurer des opérations de curage et de pompage de réseaux d'eaux usées ou déchets industriels (essence, fuel, huiles, ...) et d'ouvrages d'assainissement. L'hydrocureur 32 est équipé des moyens nécessaires au remplissage et à la vidange de la cuve 1 et notamment du système de mise en pression et de mise en dépression.

En raison de la vidange en position horizontale, sans nécessiter de basculement de la cuve 1, l'encombrement est réduit et de nombreux équipements 33 de l'hydrocureur 32 peuvent être agencés sur la cuve 1 ou à proximité de cette dernière, ce qui a pour avantage la réalisation de l'hydrocureur en deux modules, à savoir d'une part la cuve et des éléments fixés à la cuve et d'autre part un module d'équipements, comprenant un système de pompage. Ces deux modules sont facilement démontables et adaptables d'un châssis porteur à un autre. Cette mobilité de l'équipement permettant l'interchangeabilité du porteur est un avantage important dans le cadre de l'évolution environnementale actuelle des porteurs.

La cuve 1, telle que décrite ci-dessus, présente de nombreux avantages. Tout d'abord, la solution proposée a pour avantages :
- de vider complètement la cuve 1 lorsque la membrane 9 est retournée et (complètement) sortie de la cuve 1 ;
- de protéger toute la surface interne de la virole 2 de la cuve 1 métallique, à l'aide de la membrane 9 ; et
- de pouvoir rincer facilement et complètement la membrane 9 lorsqu'elle est retournée et complètement sortie.

La cuve 1, telle que décrite ci-dessus, présente également d'autres avantages, et notamment :
- de maximaliser le volume de transport ;
- d'être une solution légère, avec un gain de charge utile d'environ 500 kilogrammes, dans l'application à un hydrocureur ;
- de pouvoir vider le contenu de la cuve 1 à l'horizontale, sans basculement (ou bennage), ce qui permet de supprimer les dispositifs usuels, statiques ou mobiles, destinés à générer la vidange notamment par gravité ;
- de pouvoir réaliser une vidange sécurisée, rapide et totale de la cuve 1 ;
- de pouvoir bloquer les liquides en phase de transport ;
- de pouvoir transporter tous types de produits et notamment des produits agressifs, grâce à la membrane 9 qui peut être rendue inaltérable en particulier aux produits pétroliers ou acides ;
- de présenter un encombrement réduit ;
- de réduire le coût de construction et d'exploitation (par rapport à un dispositif usuel articulé) ;
- de pouvoir sécuriser les opérations de vidange (en supprimant l'instabilité des camions avec une cuve à basculer) et de transport (en supprimant la mobilité de la masse liquide des déchets dans la cuve) ; et
- d'augmenter la productivité, par exemple, en essorant par compression les boues, dans les cas où de l'eau peut être restituée sur le site de remplissage de la cuve.

## Revendications

1. Cuve pour stocker des produits, en particulier des produits semi-liquides, pâteux ou solides pulvérulents, ladite cuve (1) comportant :
- une virole (2) pourvue d'une ouverture (5) arrière à une extrémité longitudinale (6) arrière et une porte (7) apte à fermer cette ouverture (5) ;
- une membrane (9) souple et étanche aux gaz et aux liquides, destinée à recevoir les produits à stocker, ladite membrane (9) étant pourvue d'une ouverture (10), étant agencée à l'intérieur de la cuve (1) et étant fixée suivant une zone de fixation (27) annulaire à la face interne (12A) de la virole (2) de manière à créer un espace dit libre (15) fermé, entre la membrane (9) et la cuve (1) ; et
- un système (16) pour générer une mise en pression et une mise en dépression de l'espace libre (15) entre la cuve (1) et la membrane (9), ledit système (16) comportant un générateur de vide (26) configuré pour générer une mise en dépression d'un espace interne (11) à l'intérieur de la membrane (9),
la membrane (9) étant configurée pour :
• pouvoir être complètement plaquée contre la face interne (12A) de la virole (2) sous l'effet d'une mise en dépression générée par ledit système (16) ; et
• pouvoir être retournée et sortie de la cuve (1), à travers ladite porte (7) ouverte, sous l'effet d'une mise en pression générée par ledit système (16),
la cuve (1) étant pourvue d'une niche (36) qui est formée à l'intérieur et à l'arrière de la virole (2), qui est agencée entre la virole (2) et la membrane (9) et qui débouche, par une sortie (37) arrière, à l'ouverture (5) arrière de la virole (2) ;
la virole (2) étant pourvue d'au moins un orifice (38) traversant débouchant à l'intérieur de la niche (36), le générateur de vide (26) étant lié par l'extérieur audit orifice (38) ;
la membrane (9) étant fixée à l'extrémité longitudinale (6) arrière de la virole (2) de sorte que son ouverture (10) coïncide sensiblement avec l'ouverture (5) arrière de la virole (2) ; et
un passage (39) étant formé à partir dudit orifice (38) jusqu'à l'espace interne (11) de la membrane (9), via d'une part la niche (36) et d'autre part un espace (40) entre l'arrière de la membrane (9) et la porte (7) qui est bombée vers l'arrière, ledit passage (39) permettant audit générateur de vide (26) de générer une mise en dépression de l'espace interne (11) de la membrane (9) en vue d'un pompage de produits dans ladite membrane (9).

2. Cuve selon la revendication 1,
**caractérisée en ce que** la niche (36) présente, à sa sortie (37) arrière, une forme biconvexe avec deux surfaces (41, 42) convexes opposées de même rayon de courbure.

3. Cuve selon l'une des revendications 1 et 2,
**caractérisée en ce que** la niche (36) est formée d'au moins une pièce rapportée (43) qui est soudée sur la face interne (12A) de la virole (2).

4. Cuve selon l'une quelconque des revendications précédentes, **caractérisée en ce que** la niche (36) est fermée et étanche, excepté au niveau de sa sortie (37) arrière et de l'orifice (38).

5. Cuve selon l'une quelconque des revendications précédentes, **caractérisée en ce qu'**elle comporte un pot d'aspiration (44) qui est fixé sur la paroi externe (12B) de la virole (2) autour de l'orifice (38).

6. Cuve selon la revendication 5,
**caractérisée en ce que** le pot d'aspiration (44) est pourvue d'une boule anti-débordement (45).

7. Cuve selon l'une quelconque des revendications précédentes, **caractérisée en ce que** :
- la face (30) avant de la membrane (9) est sensiblement plane ;
- la membrane (9) présente une longueur telle que, lorsqu'elle est plaquée contre la face interne (12A) de la virole (2), son extrémité avant est située longitudinalement au niveau que l'extrémité avant de la virole (2) ; et
- la cuve (1) comprend un fond (3) avant qui est bombé vers l'avant.

8. Cuve selon l'une quelconque des revendications précédentes, **caractérisée en ce qu'**elle comporte un dispositif de limitation de pression (31) configuré pour pouvoir limiter la pression dans l'espace libre (15) entre la cuve (1) et la membrane (9).

9. Cuve selon l'une quelconque des revendications précédentes, **caractérisée en ce qu'**elle comporte au moins deux tubes (35) de support, aptes à être amenés d'une position rétractée à une position étendue vers l'arrière de la cuve (1) lorsque la membrane (9) est sortie de la cuve (1), et **en ce que**, dans la position étendue, les tubes (35) sont positionnés sensiblement parallèlement à l'axe longitudinal de la virole (2) de manière à pouvoir soutenir la membrane (9).

10. Cuve selon l'une quelconque des revendications précédentes, **caractérisée en ce que** la membrane (9) est fixée par pincement entre, d'une part, au moins une plaque (13) fixée à l'extrémité arrière de la cuve (1) sur la face interne (12A) de la virole (2) et sur la niche (36), et d'autre part, au moins une contre-plaque (17).

11. Cuve selon l'une quelconque des revendications précédentes, **caractérisée en ce que** la membrane (9) est réalisée en un matériau composite (18) comprenant différentes couches superposées, formées au moins d'une toile étanche (19), d'un tissu (20) et d'une peau (21) en polytétrafluoroéthylène.

12. Véhicule, en particulier un hydrocureur,
**caractérisé en ce qu'**il comporte au moins une cuve (1) selon l'une quelconque des revendications 1 à 11.

13. Procédé de remplissage de la cuve (1) selon l'une quelconque des revendications 1 à 11,
**caractérisé en ce qu'**il comprend au moins les étapes suivantes, consistant à :
- fermer la porte (7) de la cuve (1) ;
- générer une mise en dépression de l'espace libre (15) entre la cuve (1) et la membrane (9), à l'aide du système de mise en dépression (16), de manière à plaquer la membrane (9) contre la face interne (12A) de la cuve (1) ;
- générer une mise en dépression de l'espace interne (11) à l'aide du générateur de vide (26) afin que la pression atmosphérique pousse les produits dans cet espace interne (11), à travers un orifice (28) de remplissage, à l'intérieur de la membrane (9) ; et
- quand le remplissage est terminé, arrêter la mise en dépression de l'espace interne (11).

14. Procédé de vidange de la cuve (1) selon l'une quelconque des revendications 1 à 11,
**caractérisé en ce qu'**il comprend au moins les étapes suivantes, consistant à :
- ouvrir la porte (7) de la cuve (1) ;
- générer une mise en pression de l'espace libre (15) entre la cuve (1) et la membrane (9), à l'aide du système de mise en pression (16), de manière à repousser la membrane (9) et la déplacer, ce déplacement provoquant un retournement complet de la membrane (9) et une éjection des produits à travers la porte (7) en position ouverte (P1) ; et
- quand la vidange est terminée, arrêter la mise en pression de l'espace libre (15).

15. Procédé d'essorage de produits de la cuve (1) selon l'une quelconque des revendications 1 à 11,
**caractérisé en ce qu'**il comprend au moins les étapes suivantes, consistant à :
- la porte (7) de la cuve (1) étant fermée, générer une mise en pression de l'espace libre (15) entre la cuve (1) et la membrane (9), à l'aide du système de mise en pression (16), de manière à repousser la membrane (9) et la déplacer, ce déplacement comprimant les produits présents dans la cuve (1) de manière à générer une séparation des jus qui sont évacués par un orifice (28) d'évacuation qui est ouvert ; et
- quand l'essorage est terminé, arrêter la mise en pression de l'espace libre (15) et fermer l'orifice (28) d'évacuation.

## Patentansprüche

1. Tank zum Lagern von Produkten, insbesondere halbflüssigen, pastösen oder festen pulverförmigen Stoffen, wobei der Tank (1) umfasst:
- einen Mantel (2), der mit einer hinteren Öffnung (5) an einem hinteren Längsende (6) und einer Klappe (7) versehen ist, welche in der Lage ist, diese Öffnung (5) zu verschließen;
- eine nachgiebige und gas- und flüssigkeitsdichte Membran (9), die dazu bestimmt ist, die zu lagernden Produkte aufzunehmen, wobei die Membran (9) mit einer Öffnung (10) versehen, innerhalb des Tanks (1) angeordnet und entlang einer ringförmigen Befestigungszone (27) an der Innenseite (12A) des Mantels (2) befestigt ist, um einen geschlossenen sogenannten Freiraum (15) zwischen der Membran (9) und dem Tank (1) zu bilden; und
- ein System (16) zum Erzeugen einer Druckbeaufschlagung und einer Unterdruckbeaufschlagung des Freiraums (15) zwischen dem Tank (1) und der Membran (9), wobei das System (16) einen Vakuumerzeuger (26) umfasst, der so ausgelegt ist, dass er eine Unterdruckbeaufschlagung eines Innenraums (11) innerhalb der Membran (9) erzeugt,
wobei die Membran (9) so ausgelegt ist, dass sie:
- unter der Wirkung einer von dem System (16) erzeugten Unterdruckbeaufschlagung vollständig an die Innenseite (12A) des Mantels (2) angelegt werden kann; und
- unter der Wirkung einer von dem System (16) erzeugten Druckbeaufschlagung umgestülpt und durch die offene Klappe (7) aus dem Tank (1) herausgebracht werden kann,
wobei der Tank (1) mit einer Nische (36) versehen ist, die innerhalb und in der Hinterseite des Mantels (2) gebildet ist, die zwischen dem Mantel (2) und der Membran (9) angeordnet ist und die über einen hinteren Auslass (37) an der hinteren Öffnung (5) des Mantels (2) mündet;
wobei der Mantel (2) mit mindestens einer Durchgangsöffnung (38) versehen ist, die innerhalb der Nische (36) mündet, wobei der Vakuumerzeuger (26) von der Außenseite mit dieser Öffnung (38) verbunden ist;
wobei die Membran (9) am hinteren Längsende (6) des Mantels (2) so befestigt ist, dass sich ihre Öffnung (10) im Wesentlichen mit der hinteren Öffnung (5) des Mantels (2) deckt; und
wobei über einerseits die Nische (36) und andererseits einen Raum (40) zwischen der Hinterseite der Membran (9) und der Klappe (7), die nach hinten gewölbt ist, ein Durchgang (39) von der Öffnung (38) bis zu dem Innenraum (11) der Membran (9) gebildet ist, wobei der Durchgang (39) es dem Vakuumerzeuger (26) ermöglicht, eine Beaufschlagung des Innenraums (11) der Membran (9) mit Unterdruck zu erzeugen, um Produkte in die Membran (9) zu pumpen.

2. Tank nach Anspruch 1,
**dadurch gekennzeichnet, dass** die Nische (36) an ihrem hinteren Auslass (37) eine bikonvexe Form mit zwei gegenüberliegenden konvexen Flächen (41, 42) mit gleichem Krümmungsradius aufweist.

3. Tank nach einem der Ansprüche 1 und 2,
**dadurch gekennzeichnet, dass** die Nische (36) von mindestens einem angefügten Teilstück (43) gebildet wird, das an die Innenseite (12A) des Mantels (2) geschweißt ist.

4. Tank nach einem der vorstehenden Ansprüche,
**dadurch gekennzeichnet, dass** die Nische (36), außer an ihrem hinteren Auslass (37) und der Öffnung (38), geschlossen und dicht ist.

5. Tank nach einem der vorstehenden Ansprüche,
**dadurch gekennzeichnet, dass** er einen Ansaugtopf (44) umfasst, der um die Öffnung (38) herum an der Außenwand (12B) des Mantels (2) befestigt ist.

6. Tank nach Anspruch 5,
**dadurch gekennzeichnet, dass** der Ansaugtopf (44) mit einer Auslaufschutzkugel (45) versehen ist.

7. Tank nach einem der vorstehenden Ansprüche,
**dadurch gekennzeichnet, dass**:
- die vordere Seite (30) der Membran (9) im Wesentlichen plan ist;
- die Membran (9) eine solche Länge aufweist, dass, wenn sie an der Innenseite (12A) des Mantels (2) angelegt ist, ihr vorderes Ende sich in Längsrichtung am vorderen Ende des Mantels (2) befindet; und
- der Tank (1) einen vorderen Boden (3) umfasst, der nach vorne gewölbt ist.

8. Tank nach einem der vorstehenden Ansprüche,
**dadurch gekennzeichnet, dass** er eine Druckbegrenzungsvorrichtung (31) umfasst, die so ausgelegt ist, dass sie den Druck in dem Freiraum (15) zwischen dem Tank (1) und der Membran (9) begrenzen kann.

9. Tank nach einem der vorstehenden Ansprüche,
**dadurch gekennzeichnet, dass** er mindestens zwei Stützrohre (35) umfasst, die aus einer eingefahrenen Position in eine zur Hinterseite des Tanks (1) ausgefahrene Position gebracht werden können, wenn die Membran (9) aus dem Tank (1) herausgeholt wird, und dass in der ausgefahrenen Position die Rohre (35) im Wesentlichen parallel zur Längsachse des Mantels (2) positioniert sind, um die Membran (9) stützen zu können.

10. Tank nach einem der vorstehenden Ansprüche,
**dadurch gekennzeichnet, dass** die Membran (9) durch Einklemmen zwischen einerseits mindestens einer Platte (13), die am hinteren Ende des Tanks (1) an der Innenseite (12A) des Mantels (2) und an der Nische (36) befestigt ist, und andererseits mindestens einer Gegenplatte (17) befestigt ist.

11. Tank nach einem der vorstehenden Ansprüche,
**dadurch gekennzeichnet, dass** die Membran (9) aus einem Verbundmaterial (18) hergestellt ist, das verschiedene übereinanderliegende Schichten umfasst, die mindestens aus einem dichten Tuch (19), einem Gewebe (20) und einer Haut (21) aus Polytetrafluorethylen gebildet sind.

12. Fahrzeug, insbesondere Saugfahrzeug,
**dadurch gekennzeichnet, dass** es mindestens einen Tank (1) nach einem der Ansprüche 1 bis 11 umfasst.

13. Verfahren zum Befüllen des Tanks (1) nach einem der Ansprüche 1 bis 11,
**dadurch gekennzeichnet, dass** es mindestens die folgenden Schritte umfasst, die darin bestehen:
- die Klappe (7) des Tanks (1) zu verschließen;
- mit Hilfe des Systems zum Beaufschlagen mit Unterdruck (16) eine Beaufschlagung des Freiraums (15) zwischen dem Tank (1) und der Membran (9) mit Unterdruck zu erzeugen, um die Membran (9) an die Innenseite (12A) des Tanks (1) anzulegen;
- mit Hilfe des Vakuumgenerators (26) eine Beaufschlagung des Innenraums (11) mit Unterdruck zu erzeugen, damit der Luftdruck die Produkte durch eine Befüllöffnung (28) in diesen Innenraum (11) innerhalb der Membran (9) drückt; und
- wenn das Befüllen beendet ist, die Beaufschlagung des Innenraums (11) mit Unterdruck zu stoppen.

14. Verfahren zum Entleeren des Tanks (1) nach einem der Ansprüche 1 bis 11,
**dadurch gekennzeichnet, dass** es mindestens die folgenden Schritte umfasst, die darin bestehen:
- die Klappe (7) des Tanks (1) zu öffnen;
- mit Hilfe des Druckbeaufschlagungssystems (16) eine Druckbeaufschlagung des Freiraums (15) zwischen dem Tank (1) und der Membran (9) zu erzeugen, um die Membran (9) zurückzudrängen und sie zu verlagern, wobei diese Verlagerung ein vollständiges Umstülpen der Membran (9) und ein Austreiben der Produkte durch die in offener Position (P1) befindliche Klappe (7) bewirkt; und
- wenn das Entleeren beendet ist, die Druckbeaufschlagung des Freiraums (15) zu stoppen.

15. Verfahren zum Auspressen von Produkten aus dem Tank (1) nach einem der Ansprüche 1 bis 11,
**dadurch gekennzeichnet, dass** es mindestens die folgenden Schritte umfasst, die darin bestehen:
- bei geschlossener Klappe (7) des Tanks (1) mit Hilfe des Druckbeaufschlagungssystems (16) eine Druckbeaufschlagung des Freiraums (15) zwischen dem Tank (1) und der Membran (9) zu erzeugen, um die Membran (9) zurückzudrängen und sie zu verlagern, wobei diese Verlagerung die in dem Tank (1) vorhandenen Produkte komprimiert, um eine Abtrennung der Flüssigkeiten zu erzeugen, die durch eine geöffnete Ablassöffnung abgelassen werden; und
- wenn das Auspressen beendet ist, die Druckbeaufschlagung des Freiraums (15) zu stoppen und die Auslassöffnung (28) zu verschließen.

## Claims

1. A tank for storing products, in particular semi-liquid, pasty, or powdered solid products, said tank (1) comprising:
- a shell (2) provided with a rear opening (5) at a rear longitudinal end (6) and a door (7) capable of closing this opening (5);
- a flexible membrane (9) that is impermeable to gases and liquids, configured to receive the products to be stored, said membrane (9) being provided with an opening (10), being arranged inside the tank (1) and being attached along an annular attachment zone (27) to the inner surface (12A) of the shell (2) so as to create a so-called closed "free space" (15) between the membrane (9) and the tank (1); and
- a system (16) for pressurizing and depressurizing the free space (15) between the tank (1) and the membrane (9), said system (16) comprising a vacuum generator (26) configured to create a vacuum in an inner space (11) within the membrane (9), the membrane (9) being configured to:
• be completely pressed against the inner surface (12A) of the shell (2) under the effect of a vacuum generated by said system (16); and
• be turned over and removed from the tank (1) through said open door (7) under the effect of pressurization generated by said system (16),
the tank (1) being provided with a recess (36) which is formed inside and at the rear of the shell (2), arranged between the shell (2) and the membrane (9), and which opens into, via a rear outlet (37), the rear opening (5) of the shell (2);
the shell (2) being provided with at least a through-orifice (38) opening into the inside of the recess (36), the vacuum generator (26) being connected from the outside to said orifice (38);
the membrane (9) being secured to the rear longitudinal end (6) of the shell (2) such that its opening (10) substantially coincides with the rear opening (5) of the shell (2); and
a passage (39) being formed from said orifice (38) to the inner space (11) of the membrane (9), via, on the one hand, the recess (36) and, on the other hand, a space (40) between the rear of the membrane (9) and the door (7), which is curved backward, said passage (39) allowing said vacuum generator (26) to create a vacuum in the inner space (11) of the membrane (9) for the purpose of pumping products into said membrane (9).

2. The tank according to claim 1,
**characterized in that** the recess (36) has, at its rear outlet (37), a biconvex shape with two opposing convex surfaces (41, 42) having the same radius of curvature.

3. The tank according to one of claims 1 and 2,
**characterized in that** the recess (36) is formed by at least one insert (43) that is welded to the inner face (12A) of the shell (2).

4. The tank according to any one of the preceding claims,
**characterized in that** the recess (36) is closed and sealed, except at its rear outlet (37) and the orifice (38).

5. The tank according to any one of the preceding claims,
**characterized in that** it comprises a suction pot (44) which is secured to the external wall (12B) of the shell (2) around the orifice (38).

6. The tank according to claim 5,
**characterized in that** the suction pot (44) is provided with an anti-overflow ball (45).

7. The tank according to any of the preceding claims,
**characterized in that**:
- the front face (30) of the membrane (9) is substantially flat;
- the membrane (9) has a length such that, when it is pressed against the inner face (12A) of the shell (2), its front end is located longitudinally at the same level as the front end of the shell (2); and
- the tank (1) comprises a front bottom (3) that is curved forward.

8. The tank according to any one of the preceding claims,
**characterized in that** it comprises a pressure-limiting device (31) configured to limit the pressure in the free space (15) between the tank (1) and the membrane (9).

9. The tank according to any one of the preceding claims,
**characterized in that** it comprises at least two support tubes (35) capable of being moved from a retracted position to an extended position toward the rear of the tank (1) when the membrane (9) is removed from the tank (1), and **in that**, in the extended position, the tubes (35) are positioned substantially parallel to the longitudinal axis of the shell (2) so as to be able to support the membrane (9).

10. The tank according to any one of the preceding claims,
**characterized in that** the membrane (9) is attached by clamping between, on the one hand, at least one plate (13) attached to the rear end of the tank (1) on the inner face (12A) of the shell (2) and on the recess (36), and, on the other hand, at least one counterplate (17).

11. The tank according to any one of the preceding claims,
**characterized in that** the membrane (9) is made of a composite material (18) comprising different superimposed layers, formed of at least an impermeable fabric (19), a textile layer (20), and a skin (21) made of polytetrafluoroethylene.

12. A vehicle, in particular a sewer cleaning vehicle,
**characterized in that** it comprises at least one tank (1) according to any one of claims 1 to 11.

13. A method for filling the tank (1) according to any one of claims 1 to 11,
**characterized in that** it comprises at least the following steps, consisting of:
- closing the door (7) of the tank (1);
- generating a vacuum in the free space (15) between the tank (1) and the membrane (9) by means of the vacuum system (16), so as to press the membrane (9) against the inner surface (12A) of the tank (1);
- generating a vacuum in the inner space (11) by means of the vacuum generator (26) so that the atmospheric pressure pushes the products into this inner space (11), through a filling orifice (28), inside the membrane (9); and
- when the filling is completed, stopping the vacuum applied to the inner space (11).

14. A method for emptying the tank (1) according to any one of claims 1 to 11,
**characterized in that** it comprises at least the following steps, consisting of:
- opening the door (7) of the tank (1);
- generating a pressurization of the free space (15) between the tank (1) and the membrane (9) by means of the pressurization system (16), so as to push back the membrane (9) and move it, this movement causing a complete inversion of the membrane (9) and an ejection of the products through the door (7) in the open position (P1); and
- when the emptying is completed, stopping the pressurization of the free space (15).

15. A method for squeezing out products from the tank (1) according to any one of claims 1 to 11,
**characterized in that** it comprises at least the following steps, consisting of:
- the door (7) of the tank (1) being closed, generating a pressurization of the free space (15) between the tank (1) and the membrane (9) by means of the pressurization system (16), so as to push back the membrane (9) and move it, this movement compressing the products present in the tank (1) so as to generate a separation of the juices, which are discharged through a discharge orifice (28) which is opened; and
- when the squeezing out is completed, stopping the pressurization of the free space (15) and closing the discharge orifice (28).
